Europäisches Patentamt

European Patent Office

Office européen des brevets

(11) Publication number: **0 421 942 A1**

## EUROPEAN PATENT APPLICATION

(21) Application number: 90830098.1

(51) Int. Cl.5: **A61C 3/025**

(22) Date of filing: **13.03.90**

(30) Priority: **06.10.89 IT 364689**

(43) Date of publication of application:
**10.04.91 Bulletin 91/15**

(84) Designated Contracting States:
**CH DE ES FR GB GR LI SE**

(71) Applicant: **CASTELLINI S.p.A.**
**Via Saliceto, 22**
**I-40013 Castelmaggiore (Bologna)(IT)**

(72) Inventor: **Castellini, Franco**
**Via Bellinzona, 60**
**I-40135 Bologna(IT)**

(74) Representative: **Lanzoni, Luciano**
**c/o BUGNION S.p.A. Via dei Mille, 19**
**I-40121 Bologna(IT)**

(54) **An instrument for cleaning the surfaces ot teeth.**

(57) The handpiece (1) carries a spray head (5) that fits over a powder metering element (9) consisting in at least one duct (10) of which one end connects with a powder reservoir (7) and the other emerges into a second duct (11) directed into a pipe (26) through which air and powder are channelled into a nozzle (6); accordingly, there is a single coaxial succession of passages connecting the reservoir (7) to the pipe (26). The two ducts (10, 11) are of dissimilar diameter, such that a void (12) created between them can be charged with compressed air and a vacuum generated at the point where the first duct (10) enters the second (11), the effect of which is to draw powder forward from the reservoir and project it into the nozzle outlet pipe (26).

EP 0 421 942 A1

# AN INSTRUMENT FOR CLEANING THE SURFACES OF TEETH

The present invention relates to a dental surgery instrument for cleaning teeth.

Conventional dental surgery equipment embraces a wide variety of instruments designed to clean the surfaces of teeth employing what is essentially a sand-blasting technique.

For the most part, such instruments will consist in a fixed (or table-top) component, and a handpiece, as disclosed in US 3 882 638, for example.

The stationary component comprises a reservoir, containing a powder that can be entrained in air in such a way as to form a mixture high in abrasive power and thus suitable for cleaning purposes, and a swirl chamber, charged with the powder by means of compressed air and duly provided with respective openings for receipt of the compressed air and discharge of the air-and-powder mixture.

The handpiece is the cleaning instrument proper; this comprises a fitting at one end for attachment of the powder supply line and a water supply line, and at the remaining end, a nozzle from which the air-powder mixture and water are sprayed.

This type of arrangement has presented notable difficulties in terms of use, however, inasmuch as the handpiece must he held in a prescribed position in order to ensure that the flow of powder from the swirl chamber remains uninterrupted and balanced.

In addition, the powder supply line is relatively long, and as a result, prone to encrustation along its entire length; more exactly, the powders used in such abrasive mixtures (preferably water-soluble salts) are liable to absorb moisture during passage to the handpiece, causing not only encrustation but even complete blockage, especially at the nozzle.

Accordingly, frequent and expensive servicing is required to ensure an efficient supply of powder to the handpiece, and moisture content must be closely monitored, all of which renders this particular instrument complex and costly to operate.

EP 182 983 discloses an improvement on the design outlined above, whereby the powder reservoir and swirl chamber are incorporated directly into the handpiece, located between the air and water supply ducts and the spray nozzle, and interconnected by way of a drilled plate which both partitions-off the swirl chamber and ensures correct distribution and metering of the powder into the chamber; also, the powder reservoir accommodates a plunger biased forward by compressed air, the purpose of which is to drive the powder toward the plate and thus take up the volume left vacant by each discharge of the contents of the reservoir into the chamber, and from the chamber through a pipe to the nozzle.

This embodiment also betrays drawbacks from the servicing standpoint, and in addition, is unsound architecturally; with the swirl chamber located in close proximity to the nozzle, the operator has problems gaining access to the outlet pipes in the event of blockage occurring (the volume occupied by the bowl of the swirl chamber is relatively large).

Incorporation of the chamber in this manner also increases the external dimensions of the handpiece, especially around the grip area, leading to poor handling and balance of the instrument during use.

A similar embodiment is illustrated in EP 163 610, which discloses a handpiece with a plurality of swirl chambers positioned in series one with the next and designed to enable a thorough and uniform mixture of powder and compressed air, as well as to ensure a steady output from the nozzle regardless of the state of the reservoir and the position at which the handpiece is held. The same specification includes an alternative embodiment in which use is made of a replaceable powder cartridge, of which the end is pierced by air inlet and mixture outlet ducts in the handpiece at the moment of insertion. The patent handpiece thus described is complex in construction, in the case of the permanent chamber design, whilst the replaceable cartridge design is problematical in embodiment.

Accordingly, the object of the present invention is to overcome the drawbacks described above through the adoption of an instrument that will be more economical, more easily handled, and technically more dependable.

The stated object is realized with a handpiece as characterized in the appended claims, which is provided with a powder metering element adjacent to the spray head, comprising at least one first duct that connects on the one hand with a reservoir and emerges on the other into a corresponding second duct connecting with the mixture outlet pipe to the nozzle, thereby forming a single coaxially aligned duct extending from the reservoir to the nozzle pipe. The first and second ducts are of dissimilar diameter at the point where the one joins the other such that the void between them can be connected directly to the handpiece air inlet and the area beyond the emergence of the first duct evacuated, thus drawing powder out of the reservoir by suction and entraining it into the nozzle pipe.

A significant advantage afforded by the invention is that of exploiting the compressed air supplied to the handpiece to draw powder from the reservoir and into the nozzle pipe by negative pressure, thus eliminating the problem of internal blockages, as entrainment occurs at a point close to the nozzle, and dispensing with the need to incorporate further ducts into the handpiece for the purpose of driving the plunger toward the swirl chamber pneumatically.

The invention will now be described in detail, by way of example, with the aid of the accompanying drawings, in which:

-fig 1 shows a side elevation of the instrument disclosed in which certain parts are omitted better to reveal others;

-fig 1a is the side elevation of a detail of fig 1, viewed in enlarged scale;

-fig 2 is the section through II-II in fig 1;

-fig 3 is the section through III-III in fig 1.

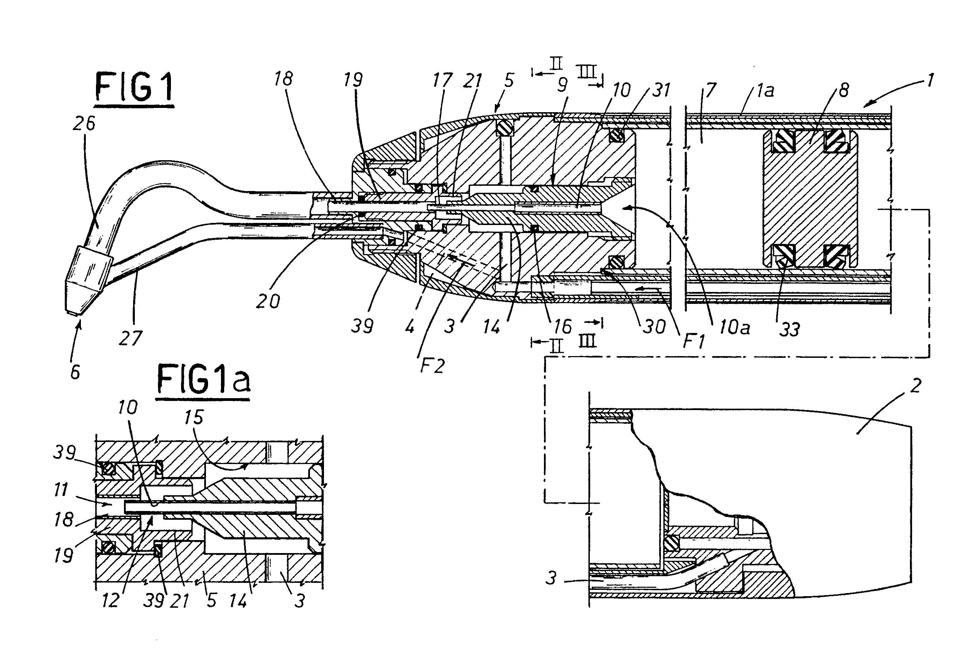

As illustrated in the drawings, the invention relates to a dental surgery instrument which cleans the external surfaces of teeth by investing them with a mixture of abrasive powder and air, sprayed together with water. Such an instrument comprises a handpiece, denoted 1 in its entirety, of which one end carries a fitting 2 for the connection of two inlet ducts 3 and 4 (air and water respectively) to the compressed air and spray circuits of a surgery apparatus pedestal; the fitting 2 is not shown in detail, being conventional, but will be a universal type used to couple several different handpieces 1. The opposite end is fitted with a spray head 5 from which independent outlet pipes 26 and 27 extend forward through dissimilar routes (as discernible in fig 1) carrying the abrasive mixture and water, respectively, to a single nozzle 6.

7 denotes an interchangeable reservoir accommodated internally of the handpiece 1 which, in the example illustrated, is nothing other than a simple tube of cylindrical shape, open at each end, containing the powder for the abrasive mixture and located between the fitting 2 and the spray head 5. The reservoir 7 is provided internally with a plunger 8, capable of movement fully end to end and in circumferential contact with the inside cylindrical wall by way of seals 33 (conventional in embodiment), in such a way as to combine with the spray head 5 in ensuring that the area containing the powder is maintained absolutely fluid-tight.

According to the invention, the handpiece 1 is provided with a powder metering element 9 located next to the spray head 5, consisting substantially in a bushing 14 permanently associated via screw threads with a corresponding socket 15, positioned centrally in the spray head. The bushing 14 affords a first longitudinal duct 10, exhibiting a funnel shaped section 10a of which the greater diameter is directed toward the reservoir 7 and extending into a first tube 17 of which one end projects forward, beyond the metering element 9, from the part of the bushing 14 nearest the nozzle 6.

11 denotes a second duct afforded by the forward part of the spray head 5, communicating on the one hand with the first duct 10 and connected coaxially to the mixture outlet pipe 26 on the other, which consists in a second tube 18 emerging at one end directly into the pipe 26. The second tube 18 is accommodated internally of a second bushing 19 permanently inserted in a corresponding socket 20 afforded by the end section of the spray head 5.

This same bushing 19 also exhibits a sleeve 21 at the end facing the metering element 9, and more exactly, the forward end of the element is loosely surrounded by the sleeve 21 in such a way that a void 12 is created between the two (see fig 1a).

It will be discernible from the drawings that the first duct 10 and the second duct 11 combine to create a coaxially composite duct extending from the reservoir 7 through to the pipe 26 by which the powder-air mixture is carried to the nozzle.

The first duct 10 and the second duct 11 are of dissimilar diameter, at least where the one emerges into the other, in such a way as to combine with the sleeve 21 and the first bushing 14 in creating the void 12; the void in turn is isolated from the reservoir 7, on the one hand, by conventional type seals 16 (e.g. flexible O-rings) circumferentially encircling the first bushing 14, and from the spray head 5 on the other, by further circumferential seals 39 that encircle the second bushing 19.

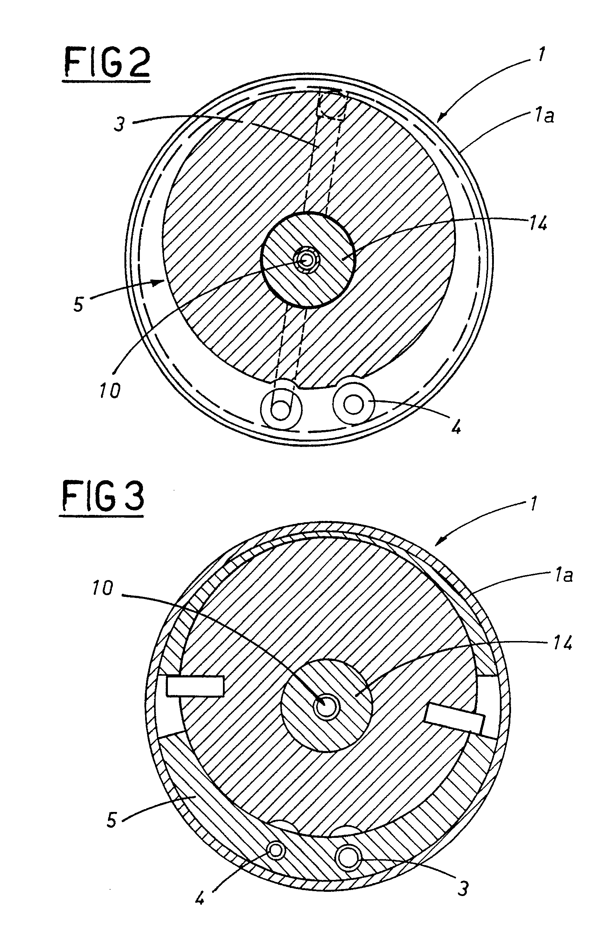

The void 12 is connected directly to the air inlet duct 3 which, like the water inlet duct 4, extends parallel with the reservoir 7 through the length of the handpiece 1 from the end fitting 2 to the spray head 5, at which point it is routed to the void 12 by way of the relative socket 15; the water duct 4, on the other hand, runs parallel with the air inlet duct 3 up to the head 5 (see figs 2 and 3) before continuing through the head (phantom line of fig 1) to join the relative pipe 27.

Returning to the reservoir 7, it will be seen from the drawings that this is embodied as a cylindrical tube with open ends; thus, the one reservoir 7 can be refilled an unlimited number of times simply by turning it through 180° to position the plunger 8 at the opposite end, and packing with fresh powder.

Reassembly of the reservoir and handpiece involves no more than applying axial pressure to slip the open end of the tube over the spray head 5, which is fashioned with a shoulder 30 and carries O-ring type sealing means 31 to ensure the necessary fluid tight fit.

Operation of the handpiece will now be described. With the reservoir 7 pressed securely onto the spray head 5, the user can assemble the remaining component of the handpiece 1, which consists in a cylindrical sheath 1a that is slipped over the reservoir 7 firmly onto the head 5, and made fast by way of a conventional bayonet coupling; this done, it remains simply to connect the fitting 2.

Treatment can commence at this point, and with air supplied to the handpiece 1, entering through the relative duct 3 (see arrow F1) and reaching the void 12, negative pressure will be generated at the point where the first duct 10 emerges into the second duct 11, the effect of which is to evacuate powder from the reservoir 7, propelling it through the two ducts 10 and 11 toward the outlet pipe 26; the resulting mixture of air and powder is thus flung into the pipe 26 and out to the nozzle 6, where it combines with water from the remaining pipe 27 (see arrow F2 in fig 1) to generate the spray projected ultimately from the nozzle 6.

It is interesting to note that the expedient thus adopted permits a gradual and automatic depletion of the contents of the reservoir, given that the velocity with which air passes tangentially to and along the ducts 10 and 11 is such as to create a partial vacuum in the reservoir of force sufficient to draw the plunger 8 forward in the direction of the spray head 5, with the result that the powder is prevented from dispersing.

## Claims

1) An instrument for cleaning the surfaces of teeth, by means of which a mixture of powder and air is sprayed together with water at the tooth surfaces, comprising: a handpiece (1), provided at one end with a fitting (2) for the connection of air and water inlet ducts (3, 4) to relative fluid supply circuits, and at the remaining end with a spray head (5) supporting two independent pipes (26, 27) by which the mixture and water respectively are carried to a single nozzle (6); a reservoir (7) of interchangeable embodiment, insertable into the handpiece (1) between the end fitting (2) and the spray head (5), and containing the powder; and a plunger (8) located inside and capable of movement along the length of the reservoir, characterized, in that the handpiece incorporates an element (9) by which the powder is metered, located adjacent to the spray head (5) and comprising at least one first duct (10) connecting with the reservoir (7) on the one hand and emerging on the other into a second duct (11) that connects with the pipe (26) by which the mixture is carried to the nozzle, in such a way as to create a single, coaxially aligned composite duct departing from the reservoir (7) and emerging into the pipe (26); and
in that the first duct (10) and second duct (11) exhibit dissimilar diameters at the point where the one emerges into the other, thereby giving place to a void (12) that is connected directly with the air inlet duct (3) to the end of generating a negative pressure around the point of emergence of the first duct such as will cause powder to be evacuated from the reservoir (7) and projected in the direction of the nozzle pipe (26).

2) An instrument as in claim 1, wherein the metering element (9) consists substantially in a bushing (14), incorporating the first duct (10), that is permanently insertable by way of a screw fit into a corresponding socket (15) positioned centrally in the spray head (5), and encircled circumferentially by first sealing means (16) located at least near to the point of emergence of the duct (10).

3) An instrument as in claim 1, wherein the first duct (10) of the metering element (9) is embodied with a funnel shaped section (10a) of which the greater diameter is directed toward the reservoir (7).

4) An instrument as in claim 1, wherein the metering element (9) accommodates a first tube (17) of which one end emerges externally of the element at the point where the first duct (10) emerges into the second duct (11).

5) An instrument as in claim 1, wherein the second duct (11) consists in a second tube (18) emerging at one end into the nozzle outlet pipe (26) and accommodated internally of a second bushing (19), permanently insertable in a corresponding socket (20) afforded by the spray head (5), of which the end directed toward the metering element (9) exhibits a sleeve (21) surrounding the end of the element and encompassing the void (12).

6) An instrument as in claim 1, wherein the reservoir (7) is embodied as a cylindrical tube with open ends that can be rotated through 180° and inserted in the handpiece *ad infinitum,* the forwardmost open end registering frontally against a shoulder (30) and internally against circumferential sealing means (31) both of which are afforded by the spray head (5).

FIG1

FIG1a

## FIG 2

## FIG 3

European
Patent Office

**EUROPEAN SEARCH
REPORT**

Application Number

**EP 90 83 0098**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 248 638  (MELER)<br>* Column 5, line 54 - column 6, line 35; figure 6 *<br>— — — | 1,3 | A 61<br>C 3/025 |
| Y | EP-A-0 072 487  (SIEMENS)<br>* Page 5, line 26 - page 6, line 16; figure 2 *<br>— — — | 1,3 | |
| A | AU-B-5 460 5  (CARTER)(1980)<br>* Page 12, lines 13-25; figure 1 *<br>— — — | 1 | |
| A | WO-A-8 502 107  (GOOF)<br>* Abstract; figure 1 *<br>— — — — — | 1 | |

TECHNICAL FIELDS
SEARCHED (Int. Cl.5)

A 61 C

The present search report has been drawn up for all claims

| Place of search | Date of completion of search | Examiner |
|---|---|---|
| The Hague | 14 November 90 | KOUSOURETAS I. |